# EUROPEAN PATENT APPLICATION

(11) **EP 4 628 395 A1**
(43) Date of publication of application: **08.10.2025**
(21) Application number: 25167786.0
(22) Date of filing: 01.04.2025
(51) Int. Cl.: B62J 31/00, B62K 25/08, F16C 33/10, F16F 9/32

(54) **BICYCLE FRONT FORKS HAVING FEATURES TO DISTRIBUTE LUBRICANT**

(30) Priority: 02.04.2024 US 202418624702
(71) Applicant: SRAM, LLC., Chicago, IL 60607 (US)
(72) Inventor: LYNCH, Timothy, Colorado Springs, 80907 (US); MAXWELL, Michael, Colorado Springs, 80907 (US); HATIN, Brian, Colorado Springs, 80907 (US); CHEN, En-Chieh, 40765 TAICHUNG CITY (TW)
(74) Representative: Thum, Bernhard

(57) **Abstract**

Bicycle front forks having features to distribute lubricant are disclosed herein. An example front fork (200) includes a lower tube (208) having a first top end (306) and a first bottom end (308), the lower tube (208) defining an interior region (312) to contain a volume of oil (302), a bushing (332, 334) coupled to an inner surface (314) of the lower tube (208), and an upper tube (204) having a second top end (303) and a second bottom end (304) opposite the second top end (303), the second bottom end (304) disposed in the lower tube (208), the upper tube (204) in sliding contact with the bushing (332, 334), the upper and lower tubes (204, 208) arranged in a telescopic arrangement and moveable between a fully extended and a fully contracted position, the upper tube (204) having a recess (344, 908), the recess (344, 908) to collect oil (302) when the upper tube (204) is moved into the lower tube (208) and distribute the oil (302) to the bushing (332, 334) when the tubes (204, 208) are moved toward the fully extended position.

## Description

### FIELD OF THE DISCLOSURE

This disclosure relates generally to bicycle components and, more particularly, to bicycle front forks having features to distribute lubricant.

### BACKGROUND

Bicycles are known to have suspension components. Suspension components are used for various applications, such as cushioning impacts, vibrations or other disturbances experienced by the bicycle during use. A common application for suspension components on bicycles is for cushioning impacts or vibrations experienced by the rider when the bicycle is ridden over bumps, ruts, rocks, pot holes, and/or other obstacles. These suspension components include rear and/or front wheel suspension components. For example, some bicycles include a front fork with telescoping legs that incorporate a spring and/or damper system.

### SUMMARY

An example front fork for a bicycle includes a lower tube having a first top end and a first bottom end opposite the first top end. The lower tube defines an interior region. The interior region is to contain a volume of oil. A bushing in the lower tube is coupled to an inner surface of the lower tube. An upper tube has a second top end and a second bottom end opposite the second top end. The second bottom end of the upper tube is disposed in the lower tube. The upper tube is to be in sliding contact with the bushing. The upper and lower tubes are to be arranged in a telescopic arrangement and are moveable between a fully extended position and a fully contracted position. The upper tube has a recess extending partially into an outer surface of the upper tube. The recess is to collect an amount of oil when the upper tube is moved into the lower tube. The recess is to distribute the amount of oil to the bushing when the upper and lower tubes are moved toward the fully extended position.

An example front fork for a bicycle includes a lower tube having an inner surface extending from a first top end of the lower tube to a first bottom end of the lower tube. The first top end is opposite the first bottom end. The lower tube is to contain a volume of oil. A bushing in the lower tube is coupled to the inner surface. An upper tube is to have an outer surface extending from a second top end of the upper tube to a second bottom end of the upper tube. The second bottom end is opposite the second top end. The upper tube and the lower tube are to be configured in a telescopic arrangement with the second bottom end of the upper tube inserted into the lower tube. The upper tube and the lower tube are to be moveable between a loaded position and a fully contracted position. The upper tube is to have a feature on the outer surface to carry an amount of oil when the upper and lower tubes are moved toward the fully contracted position. The feature is at or above the bushing in the loaded position.

### BRIEF DESCRIPTION OF THE DRAWINGS

FIG. 1 is a side view of an example bicycle that may employ any of the example front forks disclosed herein.
FIG. 2 is a perspective view of an example front fork that may incorporate example features disclosed herein.
FIG. 3A is a cross-sectional view of the example front fork of FIG. 2 taken along line A-A of FIG. 2 and shown in a fully extended position.
FIG. 3B is an enlarged view of the callout in FIG. 3A showing an example upper tube positioned relative to an example lower tube.
FIG. 3C is another cross-sectional view of the example front fork of FIG. 2 shown in a fully contracted position.
FIG. 3D is an enlarged view of the callout in FIG. 3C showing example lubricating oil positioned between the example upper tube and the example lower tube.
FIG. 4A illustrates the example upper tube, example features, and example bushings in the fully extended position.
FIG. 4B is an enlarged view of the callout in FIG. 4A showing the example features positioned relative to one of the example bushings.
FIG. 5 illustrates the example upper tube, the example features, and the example bushings in the fully contracted position.
FIG. 6A is a side view of the example upper tube of FIGS. 3A-5.
FIG. 6B is an enlarged view of the callout in FIG. 6A showing an array of the example features.
FIG. 7A is a side view of the example upper tube with an array of features that is smaller than the array shown in FIG. 6.
FIG. 7B is an enlarged view of the callout in FIG. 7A showing the example features arranged in an array.
FIGS. 8A, 8B, 8C, 8D, 8E, and 8F show example features of different shapes and/or sizes that can be implemented on the example upper tube.
FIGS. 9A and 9B illustrate tube portions with other features that can be implemented on the example upper tube.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

Descriptors "first," "second," "third," etc. are used herein when identifying multiple elements or components that may be referred to separately. Unless otherwise specified or understood based on their context of use, such descriptors are not intended to impute any meaning of priority or ordering in time but merely as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

Disclosed herein are example front forks that can be implemented on a vehicle, such as a bicycle. An example front fork disclosed herein connects a front wheel and handlebars to the frame of the bicycle (e.g., through a head tube). The front fork is a suspension component that includes first and second legs formed by first and second upper tubes (sometimes referred to as leg portions) that are telescopically arranged with respective first and second lower tubes. The first and second upper tubes are coupled to the frame (e.g., via a crown and steerer tube) and the first and second lower tubes are coupled to the front wheel. The upper tubes and lower tubes expand and contract as the bicycle is ridden over bumps and obstacles. The front fork includes bushings inside the lower tubes. The bushings are used to align the upper and lower tubes as well as provide a low friction sliding interface between the upper and lower tubes. The front fork may have a damper and a spring, such as an air spring, that act in conjunction with each other to absorb shock impulses. In some examples, the damper is in arranged in the first upper and lower tubes of the first leg, and the air spring is arranged in the second upper and lower tubes of the second leg.

A suspension fork acts as a filter for a bike rider between rough terrain and the rider's body. Fine tuning the filter of the suspension fork involves controlling damping, spring rate, and stiffness/vibration. Suspension forks can suffer from a change in damping force through increased system friction, which makes the filter less effective and results in unnecessarily harsh riding feedback. A significant contributor to system friction in a suspension fork is the interface between upper tubes and the bushings. This interface results in a certain breakaway force that needs to be overcome before the upper and lower tubes being to move. Over time, such friction can loosen the fit between the upper tubes and the associated bushings. Frictional feedback at these interfaces (between the upper tubes and the associated bushings) can be felt by the rider at the handlebars. Therefore, some front forks include an amount of lubricant, such as oil, added to the interior region of the lower tube of the fork. The oil provides lubrication to the sliding surfaces to ensure smooth sliding movement between the upper and lower tubes. However, as a structural interface, the upper tubes and the bushings are dimensioned to fit closely together, which leaves only a small (e.g., minimal) amount of room for lubrication oil. Therefore, oil in the lower tube(s) does not always migrate effectively enough to properly lubricate the interface between the upper tubes and the bushings.

Disclosed herein are example front forks with one or more features (e.g., recesses, dimples, cavities, grooves, etc.) that improve the distribution of lubricant (e.g., oil) to the interface between an upper tube and an associated bushing. These example features are defined by a discontinuous and/or interrupted geometry on the outer surface of the upper tube that can support an amount of the lubricating oil. An interior region of the lower tube may hold or otherwise contain a volume (e.g., pool) of the lubricating oil. When the upper and lower tubes compress or move toward a fully contracted position (e.g., in response to compressive impact on the front fork), the upper tube is dipped into the lubricating oil and the features on the upper leg collect and retain an amount of the lubricating oil. Example features disclosed herein may be dimples shaped to retain an amount of the oil (e.g., oil will flow/spill into the dimples). The features (on the outer surface of the upper tube) retain an amount of the oil as the upper tubes moves relative to the lower tube. Therefore, when the upper and lower tubes expand or move toward a fully extended position, the portion of the upper tube with the features slides along the bushing, thereby transferring the amount of lubricating oil to the inner surface of the bushing. This ensures proper lubrication at the interface between the bushing and the outer surface of the upper tube. Over time, as the front fork continues to expand and contract, the example features disclosed herein may continually deliver lubricating oil to the interface between the upper tube and the associated bushing. Such a lubricating effect may mitigate frictional effects that may otherwise worsen the fit of the bushing as the upper tube moves relative to the lower tube. In turn, the rider experiences a smoother ride over the life of their bicycle.

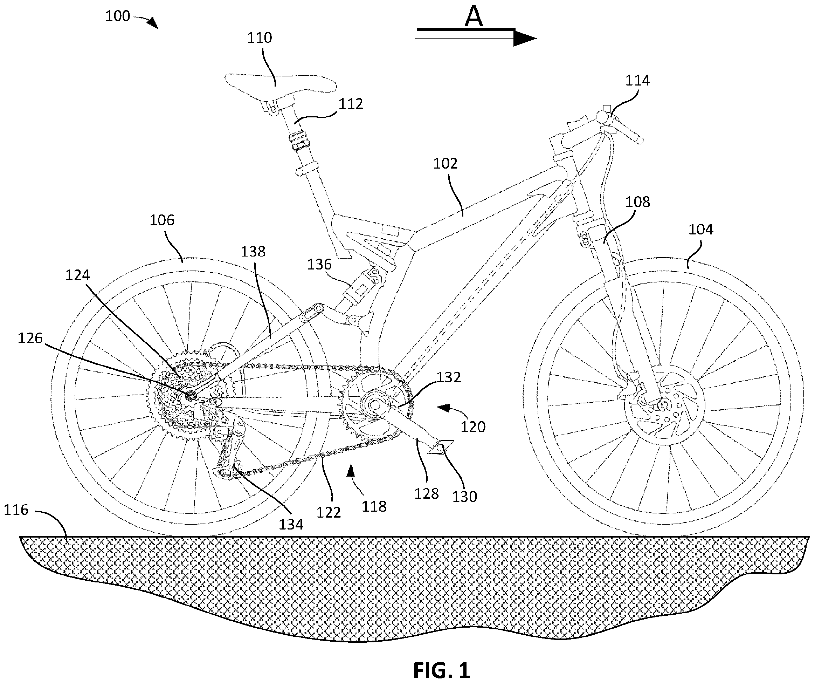

Turning now to the figures, FIG. 1 is a side view of one example of a human powered vehicle that may employ example front forks disclosed herein. In this example, the vehicle is one possible type of bicycle 100, such as a mountain bicycle. In the illustrated example, the bicycle 100 includes a frame 102 and a front wheel 104 and a rear wheel 106 rotatably coupled to the frame 102. In the illustrated example, the front wheel 104 is coupled to the front end of the frame 102 via a front fork 108. A front and/or forward riding direction or orientation of the bicycle 100 is indicated by the direction of the arrow A in FIG. 1. As such, a forward direction of movement for the bicycle 100 is indicated by the direction of arrow A.

In the illustrated example of FIG. 1, the bicycle 100 includes a seat 110 coupled to the frame 102 (e.g., near the rear end of the frame 102 relative to the forward direction A) via a seat post 112. The bicycle 100 also includes handlebars 114 coupled to the front fork 108 (e.g., near a forward end of the frame 102 relative to the forward direction A) for steering the bicycle 100. The bicycle 100 is shown on a riding surface 116. The riding surface 116 may be any riding surface such as the ground (e.g., a dirt path, a sidewalk, a street, etc.), a man-made structure above the ground (e.g., a wooden ramp), and/or any other surface.

In the illustrated example, the bicycle 100 has a drivetrain 118 that includes a crank assembly 120. The crank assembly 120 is operatively coupled via a chain 122 to a sprocket assembly 124 mounted to a hub 126 of the rear wheel 106. The crank assembly 120 includes at least one, and typically two, crank arms 128 and pedals 130, along with at least one front sprocket, or chainring 132. A rear gear change device 134, such as a derailleur, is disposed at the rear wheel 106 to move the chain 122 through different sprockets of the sprocket assembly 124. Additionally or alternatively, the bicycle 100 may include a front gear change device to move the chain 122 through gears on the chainring 132.

The example bicycle 100 includes a suspension system having one or more suspension components. In this example, the front fork 108 is implemented as a front suspension component. The front fork 108 is, or integrates, a shock absorber that includes a spring and a damper. Further, in the illustrated example, the bicycle 100 includes a rear suspension component 136, which is a shock absorber, referred to herein as the rear shock absorber 136. The rear shock absorber 136 is coupled between two portions of the frame 102, including a swing arm 138 coupled to the rear wheel 106. The front fork 108 and the rear shock absorber 136 absorb shocks and vibrations while riding the bicycle 100 (e.g., when riding over rough terrain). In other examples, the front fork 108 and/or the rear shock absorber 136 may be integrated into the bicycle 100 in other configurations or arrangements. Further, in other examples, the suspension system may employ only one suspension component (e.g., only the front fork 108) or more than two suspension components (e.g., an additional suspension component on the seat post 112) in addition to or as an alternative to the front fork 108 and rear shock absorber 136.

While the example bicycle 100 depicted in FIG. 1 is a type of mountain bicycle, the example front forks disclosed herein can be implemented on other types of bicycles. For example, the disclosed front forks may be used on road bicycles, as well as bicycles with mechanical (e.g., cable, hydraulic, pneumatic, etc.) and non-mechanical (e.g., wired, wireless) drive systems. The disclosed front forks may also be implemented on other types of two-wheeled, three-wheeled, and four-wheeled human powered vehicles. Further, the example front forks can be used on other types of vehicles, such as motorized vehicles (e.g., a motorcycle, a car, a truck, etc.).

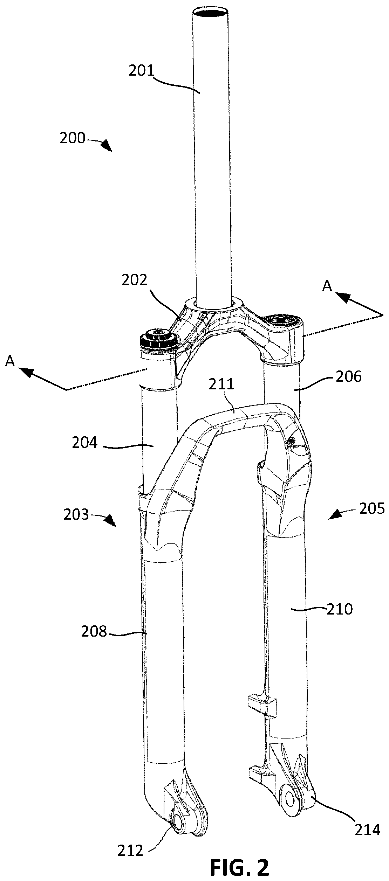

FIG. 2 is a perspective view of an example front fork 200 (a suspension component) that can be implemented as the front fork 108 on the bicycle 100 of FIG. 1. In the illustrated example of FIG. 2, the front fork 200 includes a steering tube 201, a crown 202, a first leg 203, and a second leg 205. The first leg 203 includes a first tube 204 and a second tube 208, and the second leg 205 includes a third tube 206 and a fourth tube 210. Based on the orientation shown in FIG. 2, the first and third tubes 204, 206 are referred to herein as first and second upper tubes 204, 206 (sometimes referred to as leg portions or stanchions), respectively, and the second and fourth tubes 208, 210 are referred to herein as first and second lower tubes 208, 210 (sometimes referred to as leg portions or lowers), respectively. The first and second upper tubes 204, 206 may be collectively referred to as an upper tube assembly, and the first and second lower tubes 208, 210 may be collectively referred to as a lower tube assembly. The steering tube 201 couples to the frame 102 (FIG. 1) and the handlebars 114 (FIG. 1). The first and second upper tubes 204, 206 are coupled via the crown 202. The first and second lower tubes 208, 210 are coupled via an arch 211 (sometimes referred to as a fork brace or stabilizer). The first and second lower tubes 208, 210 include respective front wheel attachment portions 212, 214, such as holes (e.g., eyelets) or dropouts, for attaching an example wheel (e.g., the front wheel 104 (FIG. 1)) to the front fork 200. The first and second upper tubes 204, 206 are slidably received within the respective first and second lower tubes 208, 210. Thus, the first and second upper tubes 204, 206 form a telescopic arrangement with the respective first and second lower tubes 208, 210. During a compression stroke, the first and second upper tubes 204, 206 move into or toward the respective first and second lower tubes 208, 210, (e.g., to a fully contracted position). During a rebound stroke, the first and second upper tubes 204, 206 move out of or away from the respective first and second lower tubes 208, 210 (e.g., to a loaded position or a fully extended position).

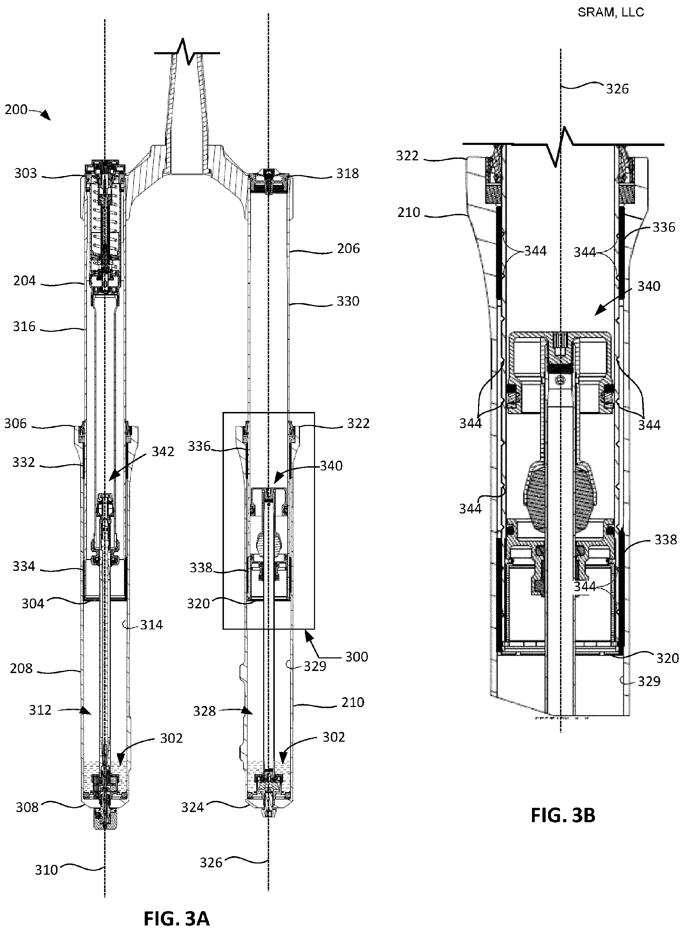

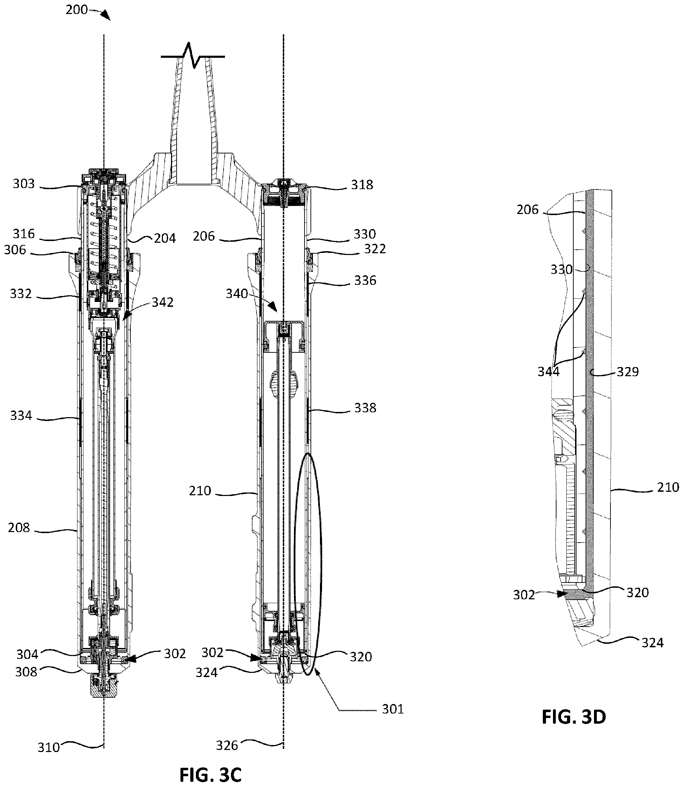

FIG. 3A is a cross-sectional view of the example front fork 200 taken along line A-A of FIG. 2 shown in a fully extended position. FIG. 3B is an enlarged view of the callout 300 of FIG. 3A showing the second upper tube 206 positioned relative to the second lower tube 210. FIG. 3C is another cross-sectional view of the example front fork 200 in a fully contracted position. FIG. 3D is an enlarged view of the callout 301 in FIG. 3C showing lubricating oil 302 positioned between the second upper tube 206 and the second lower tube 210. The front fork 200 can be compressed or expanded to any position between the fully extended position (FIG. 3A) and the fully contracted position (FIG. 3C). When the front fork 200 is installed on a bicycle, the front fork 200 typically does not reach the fully extended position, but is instead always slightly compressed under the weight of the frame 102 and/or the rider. This slightly compressed position is referred to herein as a loaded position, but can also be referred to as a normal operating position or a sag position. The front fork 200 therefore typically expands and contracts between the loaded position and the fully compressed position. In some examples, the front fork 200 includes one or more internal stops or structures that limit movement of the tubes 204, 206, 208, 210 beyond the fully extended and contracted positions.

As shown in FIGS. 3A and 3C, the first upper tube 204 has a first end 303, referred to herein as a first top end 303, and a second end 304, referred to herein as a first bottom end 304, opposite the first top end 303. The first upper tube 204 is coupled (e.g., press fit) to the crown 202 at or near the first top end 303. The first lower tube 208 has opposing first and second ends 306, 308, referred to herein as a second top end 306 and a second bottom end 308 opposite the second top end 306. The first bottom end 304 of the first upper tube 204 is disposed within the first lower tube 208. The first top end 303 of the first upper tube 204 and the second bottom end 308 of the first lower tube 208 form first and second distal ends of the suspension component. During compression (e.g., movement toward the fully contracted position in FIG. 3C), the first top end 303 (the first distal end) and the second bottom end 308 (the second distal end) are moved toward each other, and during extension or rebound (e.g., movement toward the fully extended position in FIG. 3A), the first top end 303 and the second bottom end 308 are moved away from each other. Thus, the first upper and lower tubes 204, 208 form a telescopic arrangement. The first upper and lower tubes 204, 208 are moveable between the fully extended position (FIG. 3A) and the fully contracted position (FIG. 3C) along a first translation axis 310. The first upper and lower tubes 204, 208 define an interior region 312. In the illustrated example, the front fork 200 includes a volume of the oil 302 in the interior region 312. The volume of the oil 302 is settled near the second bottom end 308 of the first lower tube 208. Further, an inner surface 314 of the first lower tube 208 extends from the second top end 306 to the second bottom end 308, and an outer surface 316 of the first upper tube 204 extends from the first top end 303 to the first bottom end 304. The front fork 200 includes one or more bushings, disclosed in further detail herein, that form a seal between the inner surface 314 of the first lower tube 208 and the outer surface 316 of the first upper tube 204.

The second upper and lower tubes 206, 210 are similarly arranged. The second upper tube 206 has a first top end 318 (e.g., a first end) and a first bottom end 320 (e.g., a second end) opposite the first top end 318. The second lower tube 210 has a second top end 322 (e.g., a first end) and a second bottom end 324 (e.g., a second end) opposite the second top end 322. The second upper tube 206 is coupled to the crown 202 at or near the first top end 318, and the first bottom end 320 of the second upper tube 206 is disposed within (e.g., inserted into, extends into, etc.) the second lower tube 210. Thus, the second upper and lower tubes 206, 210 form a telescopic arrangement. The second upper and lower tubes 206, 210 are moveable along a second translation axis 326. The second upper and lower tubes 206, 210 define an interior region 328 that contains a volume of the oil 302. The volume of the oil 302 is adjacent the second bottom end 324 of the second lower tube 210. Further, an inner surface 329 of the second lower tube 210 extends from the second top end 322 to the second bottom end 324, and an outer surface 330 of the second upper tube 206 extends from the first top end 318 to the first bottom end 320. The front fork 200 includes one or more bushings, disclosed in further detail herein, and that form a seal between the inner surface 329 of the second lower tube 210 and the outer surface 330 of the second upper tube 206.

As shown in FIGS. 3A and 3C, the front fork 200 includes upper and lower bushings 332, 334 in the first lower tube 208. The upper and lower bushings 332, 334 are coupled to the inner surface 314 of the first lower tube 208. For example, the upper and lower bushings 332, 334 can be press fit into respective glands formed on the inner surface 314. As such, the upper and lower bushings 332, 334 remain in a fixed position relative to the first lower tube 208. The upper bushing 332 is positioned between the second top end 306 of the first lower tube 208 and the lower bushing 334. Additionally, the upper and lower bushings 332, 334 are spaced axially apart from one another along a longitudinal axis (e.g., the first translation axis 310) of the first lower tube 208. The upper and lower bushings 332, 334 are in contact with the outer surface 316 of the first upper tube 204. The upper and lower bushings 332, 334 form two points of contact to ensure the first upper and lower tubes 204, 208 remain axially aligned, as well as provide a low friction interface to enable the upper and lower tubes 204, 208 to slide smoothly relative to each other. Similarly, the front fork 200 includes upper and lower bushings 336, 338 in the second lower tube 210 and coupled to the inner surface 329 of the second lower tube 210. The upper bushing 336 is positioned between the second top end 322 of the second lower tube 210 and the lower bushing 338. Further, the upper and lower bushings 336, 338 are spaced axially apart from one another along a longitudinal axis (e.g., the second translation axis 326) of the second lower tube 210. The upper and lower bushings 336, 338 are in contact with the outer surface 330 of the second upper tube 206.

In the illustrated example, the front fork 200 includes both a spring 340 and a damper 342. In this example, the spring 340 is disposed in and/or otherwise integrated into the second upper and lower tubes 206, 210 and the damper 342 is disposed in and/or otherwise integrated into the first upper and lower tubes 204, 208. In other examples, the spring 340 may be disposed in and/or otherwise integrated into the first upper and lower tubes 204, 208 and the damper 342 is disposed in and/or otherwise integrated into the second upper and lower tubes 206, 210. The spring 340 is configured to resist compression of the first and second top ends 303, 318 toward the first and second bottom ends 308, 324 and return the tubes 204, 206, 208, 210 toward the fully extended position (FIG. 3A) after compression occurs (FIG. 3C). The damper 342 is configured to limit the speed at which the compression/extension occurs and/or otherwise absorb vibrations.

As shown in the enlarged views of FIGS. 3B and 3D, the second upper tube 206 includes features to improve oil distribution. In particular, in this example, the second upper tube 206 has a plurality of recesses 344 that extend partially into the outer surface 330 of the second upper tube 206. The recesses 344 may have various shapes, sizes, and/or patterns, as disclosed in further detail herein. As shown in FIG. 3D, the recesses 344 collect (e.g., carry, support, gather, etc.) an amount of the oil 302 when the second upper tube 206 is moved into the second lower tube 210 (e.g., toward the fully contracted position). The second lower tube 210 contains a certain amount or level of the oil 302 such that when the second upper tube 206 is moved into the second lower tube 210, the bottom portion of the second upper tube 206 is at least partially submerged in the oil 302. This insertion of the second upper tube 206 moves at least some of the oil 302 into the annular space or gap between the inner surface 329 of the second lower tube 210 and the outer surface 330 of the second upper tube 206. As such, the portion (having the recesses 344) of the second upper tube 206 is coated or covered in the oil 302. Accordingly, the oil 302 can flow/spill into the recesses 344 in response to the insertion of the second upper tube 206 into the second lower tube 210.

Individually the recesses 344 can retain an amount of the oil 302 when the front fork 200 moves back toward the fully extended position. For example, as the second upper tube 206 and the second lower tube 210 return/move toward the fully extended position (FIG. 3A), the second upper tube 206 carries the oil 302 that is retained within the recesses 344. As shown in the example of FIG. 3B, at least some of the recesses 344 move past the upper and lower bushings 336, 338 when moving to the fully extended position or a loaded position, thereby wiping the bushings 336, 338 with the oil 302. As such, the recesses 344 help to deliver (e.g., distribute, spread, carry, etc.) the oil 302 to the bushings 336, 338, which ensures the bushings 336, 338 remain lubricated and can provide a smooth interface for the sliding action. In the fully extended position or any other loaded position, the lower bushing 338 at least partially covers at least one of the recesses 344. I n the fully extended position or any other loaded position, at least one of the recesses 344 is at (e.g., in the same radial location) or above the lower bushing 338. This ensures at least one of the recesses 344 encounters or moves past the lower bushing 338 to distribute oil to the lower bushing 338 as the front fork 200 expands. In some examples, in the fully extended position or any other loaded position, at least one of the recesses 344 may be at or above the upper bushing 336. This ensures at least one of the recesses 344 encounters or moves past the upper bushing 336 to distribute oil to the upper bushing 336 as the front fork 200 expands.

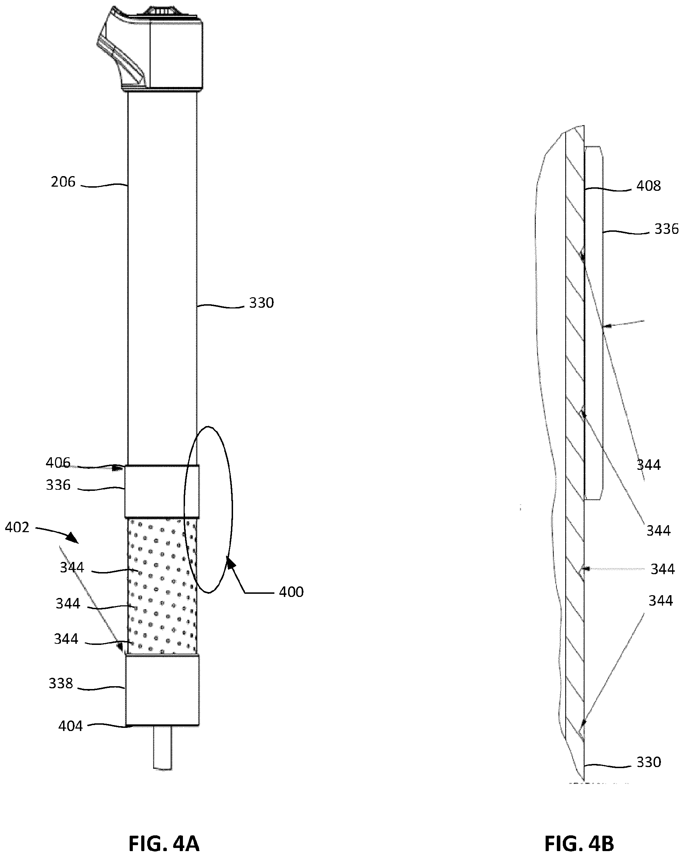

Although the recesses 344 are described in connection with the second upper tube 206 and the second lower tube 210, the first upper tube 204 can also include the recesses 344 to carry and distribute the oil 302 to the bushings 332, 334. Therefore, in some examples, both of the lower tubes 208, 210 can have recesses. Over time, as the front fork 200 continues to experience impacts that move the upper tubes 204, 206 and the lower tubes 208, 210 between the fully extended position (FIG. 3A) and the fully contracted position (FIG. 3C), the recesses 344 continually deliver the oil 302 to the bushings 332, 334, 336, 338. As shown in FIGS. 3B and 3D, the recesses 344 extend in a radial direction from the outer surface 330 towards a center axis (e.g., the second translation axis 326) of the second upper tube 206. In the illustrated example, the recesses 344 taper or reduce in size in the radial direction towards the center axis of the second upper tube 206. As such, cross-sections of the recesses 344 exhibit a generally triangular or conical shape. In an embodiment, the recesses 344 can exhibit other shapes, cross-sectional shapes, orientations, sizes, etc., as disclosed in further detail below in connection with FIGS. 4A-9B.

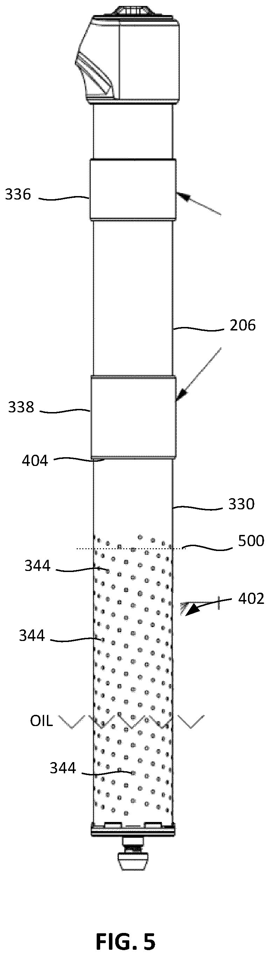

FIG. 4A illustrates the second upper tube 206 and the upper and lower bushings 336, 338 in their respective locations relative to the second upper tube 206 in the fully extended position of FIGS. 3A and 3B. The second lower tube 210 (FIG. 2) has been removed for clarity. FIG. 4B is an enlarged cross-sectional view of the callout 400 in FIG. 4A illustrating some of the recesses 344 positioned relative to the upper bushing 336. FIG. 5 illustrates the second upper tube 206 and the upper and lower bushings 336, 338 in their respective locations relative to the second upper tube 206 in the fully contracted position of FIGS. 3C and 3D. The oil level line is also shown in FIG. 5.

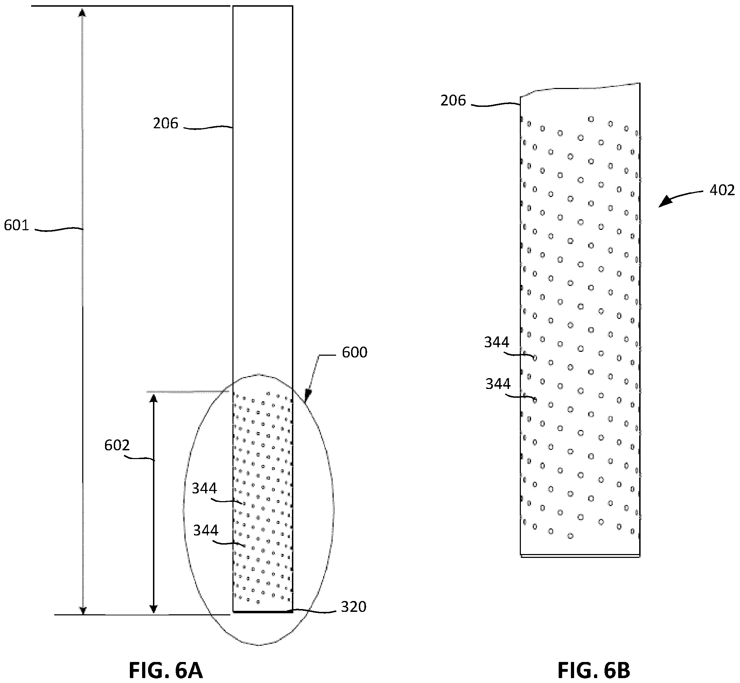

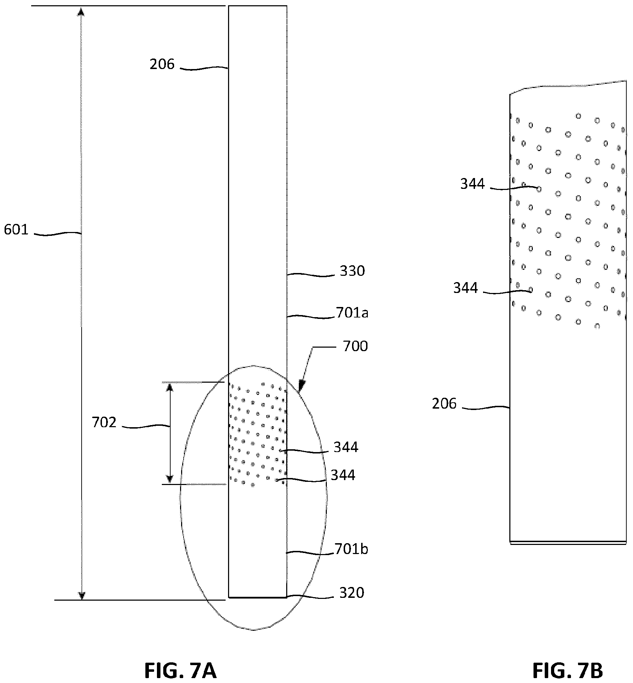

In the example of FIGS. 4A, 4B, and 5, the recesses 344 are arranged in an array distributed across the outer surface 330 of the second upper tube 206. In some examples, the second upper tube 206 may include only one of the recesses 344. In an embodiment, such as shown in FIGS. 4A, 4B, and 5, the second upper tube 206 can include a plurality or array of the recesses 344. For example, the second upper tube 206 has a plurality of the recesses 344 distributed around the circumference of the outer surface 330 of the second upper tube 206. In some examples, the plurality of the recesses 344 is positioned at different locations around the circumference of the outer surface 330. The second upper tube 206 can include any number of recesses 344 (e.g., 10, 20, 30, 100, 500, etc.). In some examples, the array of recesses 344 are arranged in a pattern. For example, as shown in detail in FIGS. 4A and 5, the array of recesses 344 are arranged in a helical pattern 402. In particular, the recesses 344 are distributed circumferentially around, and axially along, the outer surface 330 of the second upper tube 206. The pattern 402 ensures there is a sufficient number of the recesses 344 to distribute oil to the upper and lower bushings 336, 338 along all or most circumferential locations. In some examples, the array of the recesses 344 extend a distance along a length of the second upper tube 206 in a direction from the first bottom end 320 towards the first top end 318, as described in connection with FIGS. 6A and 6B. In an embodiment, in other examples, the second upper tube 206 has a plurality of the recesses 344 positioned at a circumferential location between the first bottom end 320 and the first top end 318, as described in connection with FIGS. 7A and 7B.

Turning to FIG. 4A, the pattern 402 of recesses 344 extend along a portion of the second upper tube 206 from the lower bushing 338 (e.g., a bottom edge 404 of the lower bushing 338) to the upper bushing 336 (e.g., a top edge 406 of the upper bushing 336) when the second upper tube 206 and the second lower tube 210 (FIG. 2) are in the fully extended position. As such, the recesses 344 can distribute the oil 302 (FIGS. 3A, 3C, and 3D) to both the upper bushing 336 and the lower bushing 338 when the second upper tube 206 and the second lower tube 210 (FIG. 2) are moved toward the fully extended position. In particular, the recesses 344 can distribute the oil 302 to an interface between the outer surface 330 of the second upper tube 206 and inner surfaces of the bushings 336, 338. As shown in detail in FIG. 4B, the upper bushing 336 is radially aligned or overlapping with at least one of the recesses 344. Therefore, when the second upper tube 206 and the second lower tube 210 (FIG. 2) move to the fully extended position, the recesses 344 may spread the oil 302 along inner surfaces (e.g., an inner surface 408) of the bushings 336, 338. When the second upper tube 206 and the second lower tube 210 (FIG. 2) move toward the fully contracted position (FIG. 5), the recesses 344 may collect the oil 302 from the interior region 328 of the second lower tube 210 (FIG. 3C). In some examples, the array of the recesses 344 does not extend above the upper bushing 336 (FIG. 4A) when the second upper tube 206 and the second lower tube 210 (FIG. 2) are in the fully extended position. In such examples, none of the recesses 344 is moved out of or beyond the scraper on the second top end 322 (FIG. 3) of the second lower tube 210 (FIG. 3A) and exposed to the atmosphere.

In the illustrated example, the recesses 344 are arranged such that at least two of the recesses 344 overlap along a radial plane. For example, FIG. 5 shows an example plane 500 extending in a radial direction, perpendicular to the central axis of the second upper tube 206. At least two of the recesses 344 are intersected by the radial plane 500. The bushings 336, 338 typically form discrete annular rings of contact with the outer surface 330 of the second upper tube 206. For example, the bottom edge 404 of the lower bushing 338 forms an annular ring of contact with the outer surface 330 of the second upper tube 206. By having the recesses 344 spaced as mentioned above, this ensures that while one of the recesses 344 is exiting the annular ring of contact another one of the recesses 344 is entering the ring of contact. This reduces or eliminates the possibility of audible noise being created if there were discrete breaks or gaps between the recesses 344.

Each of the recesses 344 is formed by an edge, at the outer surface 330, and an inner surface that extends radially inward to an impression depth. The edge may be a continuous edge, such as if the recess 344 is circular in shape, or can be comprised of multiple, discrete edges (e.g., an upper edge, a lower edge, a side edge), such as a triangle or square-shaped recess. Similarly, the inner surface of the recess 344 can be a continuous surface or multiple, discrete surfaces. In the illustrated example of FIG. 5, the recesses 344 are implemented as dimples, which are small, discrete, depressions in the outer surface 330 of the second upper tube 206. In this example, the recesses 344 are circular in shape, but can be shaped differently in other examples. In some examples, the recesses 344 may have a diameter of 0.2 - 3 millimeters (mm) and a depth that is about half of the diameter. For example, the recesses 344 may have a diameter of about 1 mm (e.g., ± 0.1 mm) and a depth of about 0.5 mm (e.g., ± 0.1 mm). In some examples, the above noted range ensures the recesses 344 are large enough to capture an amount of oil, but not overly large such that the oil is not adequately retained. In other examples, the recesses 344 can be larger or smaller than the above-noted range. In some examples, the depth of the recesses 344 can be based on the wall thickness of the first and/or second upper tubes 204, 206. For example, if the second upper tube 204 includes a wall thickness of 2 mm, then the depth of the recesses 344 may be no larger than 2 mm. In some examples, the depth of the recesses 344 may be proportional to the wall thickness of the first and second upper tubes 204, 206. For example, the depth of the recesses 344 are designed to be a certain percentage, such as 10%, of the wall thickness of the second upper tube 206 to be large enough to capture an amount of oil. As such, the second upper tube 206 having a wall thickness of 5 mm may include recesses 344 of 0.5 mm in depth (e.g., (5)(0.1) = 0.5). In some examples, the recesses 344 are formed by an indenting process, such as by using a ball press machine, a dot peening machine, a rotary press machine, or a stamping machine. In other examples, the recesses 344 can be formed by a subtractive machining process, such as using a drill press, a laser etching machine, or water jet machine. In other examples, the recesses 344 can be formed via casting when the second upper tube 206 is manufactured.

FIG. 6A is a side view of the second upper tube 206 of FIGS. 3A-5. FIG. 6B is an enlarged view of the callout 600 in FIG. 6A. In particular, FIG. 6B illustrates the array of the recesses 344 arranged in the helical pattern 402. As shown in FIG. 6A, the second upper tube 206 has an overall or total length 601. In this example, the array of the recesses 344 is formed on a bottom portion of the second upper tube 206 starting at the first bottom end 320 and extends a length (e.g., distance, extent, etc.) 602. The length 602 is less than the length 601. Therefore, only a portion of the second upper tube 206 has the recesses 344, while the rest of the second upper tube 206 is smooth and does not have any recesses. In this example, the recesses 344 are distributed across approximately one third (1/3) of the length 601 of the second upper tube 206. In other examples, the recesses 344 can be distributed across approximately one half (1/2) the length 601, three-fourths (3/4) the length 601, or any other amount or portion of the length 601. Alternatively, in some examples, the entire length 601 of the second upper tube 206 can have recesses 344.

FIG. 7A is a side view of the second upper tube 206 having a smaller portion or length of the recesses 344. FIG. 7B is an enlarged view of the callout 700 of FIG. 7A. In this example, the array of the recesses 344 does not extend to the bottom end 320 of the second upper tube 206. As such, the second upper tube 206 has a portion 701a without recesses above the array and a portion 701b without recesses below the array. In this example, the array of the recesses 344 extends along a length 702 of the overall length 601, which is less than the length 602 of the example in FIGS. 6A and 6B. As such, a first portion of the outer surface 330 includes the array of the recesses 344. A second portion of the outer surface 330 extends in a first direction (e.g., along the second translation axis 326 (FIG. 3A)) away from the first portion and a third portion of the outer surface 330 extends in a second direction away from the first portion, the second direction opposite the first direction.

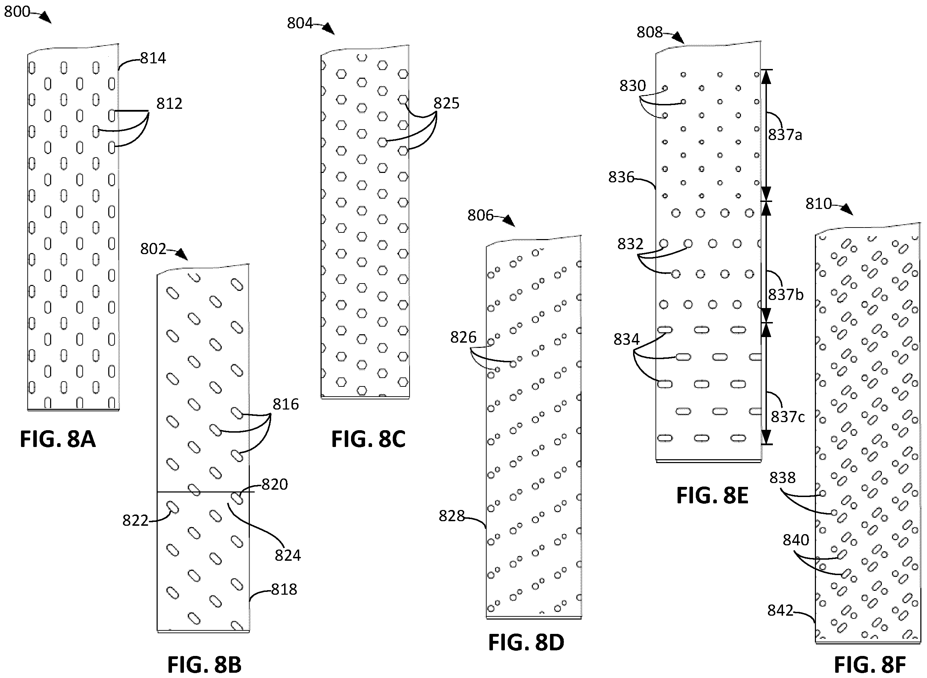

FIGS. 8A, 8B, 8C, 8D, 8E, and 8F illustrate tube portions 800, 802, 804, 806, 808, 810 with various recess shapes and patterns that can be implemented on the first upper tube 204 and/or the second upper tube 206 of FIGS. 3A-3D. In some examples, the tube portions 800, 802, 804, 806, 808, 810 represent a full length of a tube (e.g., the second upper tube 206 from the first bottom end 320 to the first top end 318). In other examples, the tube portions 800, 802, 804, 806, 808, 810 can represent a partial length of a tube. For example, the tube portions 800, 802, 804, 806, 808, 810 can represent a portion of the second upper tube 206 extending from the first bottom end 320 towards the first top end 318. In an embodiment, in other examples, the tube portions 800, 802, 804, 806, 808, 810 can represent a portion of the second upper tube 206 at a circumferential location between the first bottom end 320 and the first top end 318. Similar to the embodiments described above in connection with FIGS. 6A, 6B, 7A, and 7B the section array or plurality of recesses (e.g., the recesses 344) may only extend along a portion of the upper tubes 204, 206.

The tube portion 800 in FIG. 8A illustrates an array of recesses 812 having an oval shape. Further, the recesses 812 are arranged in a first orientation (e.g., angle, tilt, etc.) with respect to an outer surface 814 of the tube portion 800. In particular, the recesses 812 are oriented in a direction in which the oval shapes are aligned with the axial direction of the tube portion 800. In FIG. 8B, the tube portion 802 includes an array of recesses 816 having oval shapes similar to the recesses 812 of FIG. 8A. In this illustrated embodiment, each of the recesses 816 in FIG. 8B are arranged in a second orientation with respect to an outer surface 818 of the tube portion 802, the second orientation different from the first orientation. In particular, the recesses 816 are oriented in a direction in which the oval shapes are angled (e.g., at 45 degrees (°)) relative to the axial direction of the tube portion 802. In the example of FIG. 8B, a first one 820 of the recesses 816 and a second one 822 of the recesses 816 at least partially overlap or are intersected by a radial plane 824 associated with the tube portion 802. In some examples, the radial plane 824 may be defined by the annular ring of contact of one of the bushings 336, 338 (FIGS. 3A, 3B, 3C, 4A, and 5) and the outer surface 818 of the tube portion 802. In some examples, when the tube portion 802 is in the fully extended position (FIGS. 3A and 4A), the first one 820 of the recesses 816 and the second one 822 of the recesses 816 may both carry the oil 302 to the lower bushing 338 (FIGS. 3A, 3B, 3C, 4A, and 5) defining the annular reference line or radial plane 824. The oil 302 (FIGS. 3A, 3C, and 3D) may empty (e.g., spill, flow, etc.) from the first one 820 of the recesses 816 prior to emptying from the second one 822 of the recesses 816. Alternatively, the first and second ones 820, 822 of the recesses 816 may retain different amounts of the oil 302 when the first and second ones 820, 822 contact/reach the radial plane 824.

The tube portion 804 of FIG. 8C illustrates an array of recesses 825 having a hexagonal shape. The tube portion 806 of FIG. 8D illustrates an array of recesses 826 having circular shapes of different sizes. For example, a first set of the recesses 826 have a first size (e.g., circumference, depth, etc.) that is greater than a second size of a second set of the recesses 826. The recesses 826 of the first set are paired with the recesses 826 of the second set, and the pairs are distributed across an outer surface 828 of the tube portion 806. For example, each of the recesses 826 of the first set are adjacent one of the recesses 826 of the second set.

The tube portion 808 of FIG. 8E includes a first set of recesses 830 arranged in an array, a second set of recesses 832 arranged in an array, and a third set of recesses 834 arranged in an array. The recesses 830, 832, 834 have different sizes and/or shapes. For example, the first set of the recesses 830 and the second set of the recesses 832 have a circular shape (e.g., circular opening). The recesses 830 of the first set are smaller in diameter than the recesses 832 of the second set. The third set of the recesses 834 have an oval shape (e.g., oval opening) different from the shapes of the first and second sets of the recesses 830, 832. The third set of the recesses 834 in FIG. 8E are similar to the recesses 812, 816 in FIGS. 8A-8B, but the third set of the recesses 834 in FIG. 8E are arranged in a third orientation different from the first orientation of the recesses 812 (FIG. 8A) and the second orientation of the recesses 816 (FIG. 8B). Moreover, the third orientation associated with the third set of the recesses 834 is approximately perpendicular (e.g., with 2 degrees) to the first orientation of the recesses 812 in FIG. 8A.

Further, the first set of the recesses 830 are positioned at a first location on an outer surface 836 of the tube portion 808, the second set of the recesses 832 are positioned at a second location on the outer surface 836, and the third set of the recesses 834 are positioned at a third location on the outer surface 836. The first location associated with the first set of the recesses 830 is adjacent to the second location associated with the second set of the recesses 832 (in an axial direction along a longitudinal axis of the tube portion 808). Similarly, the second location associated with the second set of the recesses 832 is adjacent to the third location associated with the third set of the recesses 834 (in the axial direction along the longitudinal axis of the tube portion 808). In some examples, the first location may be spaced apart from the second location. In other words, a portion of the outer surface 836 may separate the first set of the recesses 830 from the second set of the recesses 832. In some examples, the first set of the recesses 830 can extend a first length 837a along a length of the tube portion 808, the second set of the recesses 832 can extend a second length 837b along a length of the tube portion 808, and the third set of the recesses 834 can extend a third length 837c along a length of the tube portion 808. In some examples, the first length 837a, the second length 837b, and the third length 837c are about equal (e.g., +/- 1 mm). In some examples, the first length 837a is different from the second length 837b, the second length 837b is different from the third length 837c, etc.

The tube portion 810 of FIG. 8F illustrates an array of first recesses 838 and second recesses 840. In this example, the first recesses 838 have a circular shape and the second recesses 840 have an oval shape. The first and second recesses 838, 840 of FIG. 8F are similar to the recesses 826 of FIG. 8D, but two of the first recesses 838 are paired with two of the second recesses 840 to define a group of the recesses 838, 840. The groups of the recesses 838, 840 are distributed across an outer surface 842 of the tube portion 810.

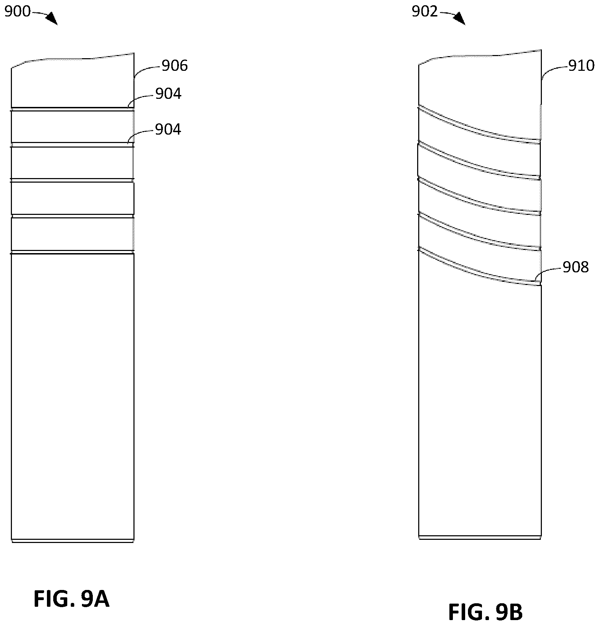

FIGS. 9A and 9B illustrate tube portions 900, 902 with other features that can be implemented on the first upper tube 204 and/or the second upper tube 206 of FIGS. 3A-3D. Turning to FIG. 9A, the tube portion 900 includes an array or plurality of ring-shaped recesses 904 (e.g., grooves, trenches, etc.) that extend circumferentially around (e.g., trace, traverse, etc.) an outer surface 906 of the tube portion 900. The ring-shaped recesses 904 are arranged in an array that is distributed across the outer surface 906. Further, the ring-shaped recesses 904 are spaced axially from one another along a longitudinal axis of the tube portion 900. As shown in FIG. 9A, the ring-shaped recesses 904 are generally circular (surrounding the outer surface 906). In other examples, the ring-shaped recesses 904 may have any general shape or path (e.g., swooping, swerving, zig zagging, etc.) around the outer surface 906.

The tube portion 902 of FIG. 9B includes a ring-shaped recess 908 that traverses an outer surface 910 of the tube portion 902 in a helical direction. In other words, the ring-shaped recess 908 forms a continuous spiral along the outer surface 910. In other examples, the tube portion 902 may include multiple ones of the ring-shaped recess 908 that form a discontinuous (e.g., dashed) spiral across the outer surface 910. In the example of FIG. 9B, the ring-shaped recess 908 helically traces the outer surface 910 in a clockwise direction. In an embodiment, the ring-shaped recess 908 may helically trace the outer surface 910 in a counter-clockwise direction.

Any of the example features (e.g., recesses, grooves, etc.) disclosed in connection with FIGS. 8A-8F and 9A-9B can be formed by an indenting process, such as by using a ball press machine, a dot peening machine, a rotary press machine, or a stamping machine. In other examples, the features can be formed by a subtractive machining process, such as using a drill press, a laser etching machine, or water jet machine. In other examples, the features can be formed via casting when the second upper tube is manufactured.

While the example front fork 200 of FIG. 2 includes two legs, in other examples, the front fork 200 can be configured as a single-side fork that only includes one of the legs. In such an example, the single leg may include a damper, a spring, or a combination spring and damper. Any of the example oil distribution features disclosed herein can be implemented on such a single leg fork configuration. Also, while the oil distribution features disclosed herein are described in connection with a front suspension fork, any of the examples disclosed herein can be similarly implemented in connection with another type of suspension component, such as the rear shock absorber 136. For example reach shock absorbers having two tubes or body portions that are telescopically arrange. Any of the example oil distribution features can be similarly implemented on one of the tubes of the shock absorber.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

From the foregoing, it will be appreciated that example systems, apparatus, articles of manufacture, and methods have been disclosed that reduce friction in a front fork of a bicycle by delivering lubricating oil to the interface between the upper tube(s) and the associated bushing. Disclosed examples mitigate frictional effects that may otherwise worsen the fit of the bushing as the upper tube moves relative to the lower tube. In turn, the rider will experience a smoother ride.

Example front forks for bicycles have been disclosed herein. The following paragraphs provide various examples and example combinations of the examples disclosed herein.

Example 1 is a front fork for a bicycle. The front fork comprises a lower tube having a first top end and a first bottom end opposite the first top end, the lower tube defining an interior region, the interior region to contain a volume of oil, a bushing in the lower tube and coupled to an inner surface of the lower tube, and an upper tube having a second top end and a second bottom end opposite the second top end, the second bottom end of the upper tube disposed in the lower tube, the upper tube in sliding contact with the bushing, the upper and lower tubes arranged in a telescopic arrangement and moveable between a fully extended position and a fully contracted position, the upper tube having a recess extending partially into an outer surface of the upper tube, the recess to collect an amount of oil when the upper tube is moved into the lower tube and distribute the amount of oil to the bushing when the upper and lower tubes are moved toward the fully extended position.

Example 2 includes the front fork of example 1, wherein the bushing at least partially covers the recess in the fully extended position.

Example 3 includes the front fork of any one of examples 1-2, wherein the recess is a dimple.

Example 4 includes the front fork of any one of examples 1-3, wherein the recess has a hexagonal shape, a triangular shape, an oval shape, or a circular shape.

Example 5 includes the front fork of any one of examples 1-4, wherein the recess extends in a radial direction towards a center axis of the upper tube, and wherein the recess tapers in size in the radial direction towards the center axis.

Example 6 includes the front fork of any one of examples 1-5, wherein the recess is a first recess in an array of recesses, the array of recesses distributed across the circumference of the outer surface of the upper tube.

Example 7 includes the front fork of example 6, wherein the array of recesses are arranged in a helical pattern.

Example 8 includes the front fork of any one of examples 6-7, wherein the first recess and a second recess of the array of recesses have different shapes.

Example 9 includes the front fork of any one of examples 6-8, wherein the first recess and a second recess of the array of recesses are intersected by a radial plane that is perpendicular to a central axis of the upper tube.

Example 10 includes the front fork of example 9, wherein the bushing overlaps the first and second recesses in the fully extended position.

Example 11 includes the front fork of any one of examples 1-2, wherein the recess is a ring-shaped recess that extends circumferentially around the outer surface of the upper tube.

Example 12 includes the front fork of example 11, wherein the ring-shaped recess is a first ring-shaped recess in an array of ring-shaped recesses, the array of ring-shaped recesses distributed across the outer surface of the upper tube, the ring-shaped recess spaced axially from one another along a longitudinal axis of the upper tube.

Example 13 includes the front fork of any one of examples 1-11, wherein the bushing is a first bushing, further including a second bushing coupled to the inner surface of the lower tube, the second bushing positioned between the first bushing and the first top end, the first and second bushings spaced axially apart from one another along a longitudinal axis of the lower tube, the recess to distribute the amount of oil to the second bushing when the upper and lower tubes are moved to the fully extended position.

Example 14 includes the front fork of example 1, further including at least one of a damper or a spring positioned in the upper and lower tubes.

Example 15 includes a front fork for a bicycle. The front fork comprises a lower tube having an inner surface extending from a first top end of the lower tube to a first bottom end of the lower tube, the first top end opposite the first bottom end, the lower tube to contain a volume of oil, a bushing in the lower tube, the bushing coupled to the inner surface, and an upper tube having an outer surface extending from a second top end of the upper tube to a second bottom end of the upper tube, the second bottom end opposite the second top end, the upper tube and the lower tube configured in a telescopic arrangement with the second bottom end of the upper tube inserted into the lower tube, the upper tube and the lower tube moveable between a loaded position and a fully contracted position, the upper tube having a feature on the outer surface to carry an amount of oil when the upper and lower tubes are moved toward the fully contracted position, wherein the feature is at or above the bushing in the loaded position.

Example 16 includes the front fork of example 15, wherein the bushing is a first bushing, further including a second bushing coupled to the inner surface of the lower tube, the second bushing positioned between the first bushing and the feature in the fully contracted position, the first and second bushings spaced axially apart from one another along a longitudinal axis of the lower tube.

Example 17 includes the front fork of any one of examples 15-16, wherein the feature is a groove in the outer surface, the groove to traverse the outer surface in a helical direction.

Example 18 includes the front fork of any one of examples 15-16, wherein the feature includes an array of recesses, the array of recesses distributed to circumferentially surround the outer surface.

Example 19 includes the front fork of example 18, wherein the array of recesses includes a first set of the recesses having a first shape and a second set of the recesses having a second shape, the first set of the recesses positioned at a first location on the outer surface and the second set of recesses positioned at a second location on the outer surface, the second location adjacent to the first location in an axial direction along a longitudinal axis of the upper tube.

Example 20 includes the front fork of any one of examples 18-19, wherein a first portion of the outer surface includes the array of recesses, further including a second portion of the outer surface extending in a first direction away from the first portion and a third portion of the outer surface extending in a second direction away from the first portion, the second direction opposite the first direction.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

## Claims

1. A front fork for a bicycle, the front fork comprising:
a lower tube having a first top end and a first bottom end opposite the first top end, the lower tube defining an interior region, the interior region to contain a volume of oil;
a bushing in the lower tube and coupled to an inner surface of the lower tube; and
an upper tube having a second top end and a second bottom end opposite the second top end, the second bottom end of the upper tube disposed in the lower tube, the upper tube in sliding contact with the bushing, the upper and lower tubes arranged in a telescopic arrangement and moveable between a fully extended position and a fully contracted position, the upper tube having a recess extending partially into an outer surface of the upper tube, the recess to collect an amount of oil when the upper tube is moved into the lower tube and distribute the amount of oil to the bushing when the upper and lower tubes are moved toward the fully extended position.

2. The front fork of claim 1, wherein the bushing at least partially covers the recess in the fully extended position.

3. The front fork of claim 1 or 2, wherein the recess is a dimple,
and/or wherein the recess has a hexagonal shape, a triangular shape, an oval shape, or a circular shape.

4. The front fork of one of the preceding claims, wherein the recess extends in a radial direction towards a center axis of the upper tube, and wherein the recess tapers in size in the radial direction towards the center axis.

5. The front fork of one of the preceding claims , wherein the recess is a first recess in an array of recesses, the array of recesses distributed across the circumference of the outer surface of the upper tube,
wherein as an optional feature the array of recesses are arranged in a helical pattern.

6. The front fork of claim 5, wherein the first recess and a second recess of the array of recesses have different shapes,
and/or wherein the first recess and a second recess of the array of recesses are intersected by a radial plane that is perpendicular to a central axis of the upper tube, wherein as an optional feature the bushing overlaps the first and second recesses in the fully extended position.

7. The front fork of one of the preceding claims, wherein the recess is a ring-shaped recess that extends circumferentially around the outer surface of the upper tube.

8. The front fork of claim 7, wherein the ring-shaped recess is a first ring-shaped recess in an array of ring-shaped recesses, the array of ring-shaped recesses distributed across the outer surface of the upper tube, the ring-shaped recess spaced axially from one another along a longitudinal axis of the upper tube.

9. The front fork of one of the preceding claims, wherein the bushing is a first bushing, further including a second bushing coupled to the inner surface of the lower tube, the second bushing positioned between the first bushing and the first top end, the first and second bushings spaced axially apart from one another along a longitudinal axis of the lower tube, the recess to distribute the amount of oil to the second bushing when the upper and lower tubes are moved to the fully extended position.

10. The front fork of one of the preceding claims, further including at least one of a damper or a spring positioned in the upper and lower tubes.

11. A front fork for a bicycle, the front fork comprising:
a lower tube having an inner surface extending from a first top end of the lower tube to a first bottom end of the lower tube, the first top end opposite the first bottom end, the lower tube to contain a volume of oil;
a bushing in the lower tube, the bushing coupled to the inner surface; and
an upper tube having an outer surface extending from a second top end of the upper tube to a second bottom end of the upper tube, the second bottom end opposite the second top end, the upper tube and the lower tube configured in a telescopic arrangement with the second bottom end of the upper tube inserted into the lower tube, the upper tube and the lower tube moveable between a loaded position and a fully contracted position, the upper tube having a feature on the outer surface to carry an amount of oil when the upper and lower tubes are moved toward the fully contracted position, wherein the feature is at or above the bushing in the loaded position.

12. The front fork of claim 11, wherein the bushing is a first bushing, further including a second bushing coupled to the inner surface of the lower tube, the second bushing positioned between the first bushing and the feature in the fully contracted position, the first and second bushings spaced axially apart from one another along a longitudinal axis of the lower tube.

13. The front fork of claim 11 or 12, wherein the feature is a groove in the outer surface, the groove to traverse the outer surface in a helical direction,
and/or wherein the feature includes an array of recesses, the array of recesses distributed to circumferentially surround the outer surface.

14. The front fork of claim 13, wherein the array of recesses includes a first set of the recesses having a first shape and a second set of the recesses having a second shape, the first set of the recesses positioned at a first location on the outer surface and the second set of recesses positioned at a second location on the outer surface, the second location adjacent to the first location in an axial direction along a longitudinal axis of the upper tube.

15. The front fork of claim 13 or 14, wherein a first portion of the outer surface includes the array of recesses, further including a second portion of the outer surface extending in a first direction away from the first portion and a third portion of the outer surface extending in a second direction away from the first portion, the second direction opposite the first direction.
